(19) Europäisches Patentamt / European Patent Office / Office européen des brevets

(11) **EP 3 998 580 B1**

(12) **EUROPEAN PATENT SPECIFICATION**

(45) Date of publication and mention of the grant of the patent:
**10.01.2024 Bulletin 2024/02**

(21) Application number: **22164046.9**

(22) Date of filing: **24.03.2022**

(51) International Patent Classification (IPC):
**G06T 7/80** (2017.01)

(52) Cooperative Patent Classification (CPC):
**G06T 7/80;** G06T 2207/30236

(54) **CAMERA CALIBRATION METHOD AND APPARATUS, ELECTRONIC DEVICE, STORAGE MEDIUM, PROGRAM PRODUCT, AND ROAD SIDE DEVICE**

VERFAHREN UND GERÄT ZUR KAMERAKALIBRIERUNG, ELEKTRONISCHES GERÄT, SPEICHERMEDIUM, PROGRAMMPRODUKT UND STRASSENSEITIGES GERÄT

PROCEDE ET APPAREIL DE CALIBRAGE DE CAMERA, DISPOSITIF ELECTRONIQUE, SUPPORT DE STOCKAGE, PRODUIT DE PROGRAMME, ET DISPOSITIF ROUTIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.04.2021 CN 202110454464**

(43) Date of publication of application:
**18.05.2022 Bulletin 2022/20**

(73) Proprietor: **Apollo Intelligent Connectivity (Beijing) Technology Co., Ltd.**
**Beijing 100176 (CN)**

(72) Inventor: **YUAN, Libin**
**BEIJING, 100176 (CN)**

(74) Representative: **Viering, Jentschura & Partner mbB**
**Patent- und Rechtsanwälte**
**Am Brauhaus 8**
**01099 Dresden (DE)**

(56) References cited:
**US-A1- 2018 068 462     US-A1- 2020 226 789**

• **GERUM RICHARD C. ET AL: "CameraTransform: A Python package for perspective corrections and image mapping", SOFTWAREX, vol. 10, 1 July 2019 (2019-07-01), page 100333, XP055958712, ISSN: 2352-7110, DOI: 10.1016/j.softx.2019.100333 Retrieved from the Internet: URL:https://www.sciencedirect.com/science/ article/pii/S2352711019302018/pdfft?md5=e1 7a82482fd43217ea192599545a3100&pid=1-s2.0- S2352711019302018-main.pdf>**

**Description**

## TECHNICAL FIELD

The present disclosure relates to the technical field of intelligent transportation and vehicle and infrastructure cooperation, and in particular to a camera calibration method and apparatus and a road side device.

## BACKGROUND

Under the overall background of new infrastructure, a vehicle-to-everything (V2X) road side sensing system supplies sensing information beyond a visual range to a vehicle realizing vehicle and infrastructure cooperation. A camera is one of main sensors in the road side sensing system. In general, three cameras can be installed on an upright pole in a direction of a junction at the same time, including a front view gun type camera, a rear view gun type camera, and a fisheye camera, respectively. The fisheye camera is used to supplement a dead zone between the front view camera and the rear view camera. An internal parameter of a road side sensing camera, as a basic parameter for road side sensing of the vehicle and infrastructure cooperation, is crucial to pre-processing, distortion eliminating, of an image and plays an important role in precision and robustness of the road side sensing system. The gun type camera (a gun camera for short) and the fisheye camera, as important sensors, need to be calibrated before they can be used. In the prior art, the calibration is usually performed through a method of "A Flexible New Technique for Camera Calibration" provided by Zhang Zhengyou, where the internal parameter of the camera is calibrated by collecting images of a plurality of groups of calibration plates, such as checkerboards, or black-and-white grids for a series of calculations. However, the method requires an operator to place a checkerboard within the view field of the camera on a monitoring pole at the junction and to collect an image of the checkerboard, which requires much labor cost and time cost.

The US patent application US 2020/226789A1 discloses a camera calibration plate including a planar plate body, and a plurality of groups of concentric circles on the planar plate body. The plurality of groups of concentric circles are same and include solid circle center points. The plurality of groups of concentric circles are distributed in an array.

## SUMMARY

The present disclosure provides a camera calibration method and apparatus and a road side device and is used to solve at least one of the above problems. The present invention and its preferred embodiments are apparent from the appendant set of claims.

According to a first aspect of the present disclosure, there is provided a camera calibration method, as defined in claim 1.

According to a second aspect of the present disclosure, there is provided a camera calibration apparatus, as defined in claim 6.

According to a third aspect of the present disclosure, there is provided an electronic device, including:

at least one processor; and
a memory communicatively connected with the at least one processor, wherein
the memory stores instructions executable by the at least one processor, and the instructions, when executed by the at least one processor, enable the at least one processor to perform the above method.

According to a fourth aspect of the present disclosure, there is provided a non-transitory computer-readable storage medium storing computer instructions. The computer instructions, when executed by a computer, case the computer to perform the above method.

According to a fifth aspect of the present disclosure, there is provided a computer program product including a computer program. The computer program, when executed by a processor, implements the above method.

According to a sixth aspect of the present disclosure, there is provided a road side device including the above-mentioned electronic device.

Camera calibration solutions in the embodiments of the present disclosure do not require assistance of a calibration plate in a whole process, but intelligently uses a corresponding relationship between a high-precision map and an image captured by the camera to establish a least square optimization algorithm for camera calibration. The embodiments of the present disclosure save the cost, and conveniently and fast perform the processing.

It should be understood that the content described in this section is neither intended to identify the key or important features of the embodiments of the present disclosure, nor intended to limit the scope of the present disclosure. Other features of the present disclosure will be readily understood through the following description.

## BRIEF DESCRIPTION OF THE DRAWINGS

The drawings are used to better understand the solution and do not constitute a limitation to the present disclosure. In which:

FIG. 1 is a flowchart block diagram of a camera calibration method of an embodiment of the present disclosure;

FIG. 2 is a schematic diagram of a process of calibration of an internal parameter of a gun camera of an embodiment of the present disclosure;

FIG. 3 is a schematic diagram of projecting feature points in a high-precision map onto an image in the embodiment of FIG. 2;

FIG. 4 is a partially enlarged diagram of the embodiment of FIG. 2;

FIG. 5 is a schematic diagram after the distortion eliminating of an image in the embodiment of FIG. 2;

FIG. 6 is a schematic diagram of a process of calibration of an internal parameter of a fisheye camera of the embodiment of the present disclosure;

FIG. 7 is a schematic diagram of projecting feature points in a high-precision map onto an image in the embodiment of FIG. 6;

FIG. 8 is a partially enlarged diagram of the embodiment of FIG. 6;

FIG. 9 is a schematic diagram after the distortion eliminating of the image in the embodiment of FIG. 6;

FIG. 10 is a structural block diagram of a camera calibration apparatus in an embodiment of the present disclosure; and

FIG. 11 is a block diagram of an electronic device implementing the camera calibration method of the embodiment of the present disclosure.

## DETAILED DESCRIPTION

Exemplary embodiments of the present disclosure are described below in combination with the drawings, including various details of the embodiments of the present disclosure to facilitate understanding, which should be considered as exemplary only. Likewise, descriptions of well-known functions and structures are omitted in the following description for clarity and conciseness.

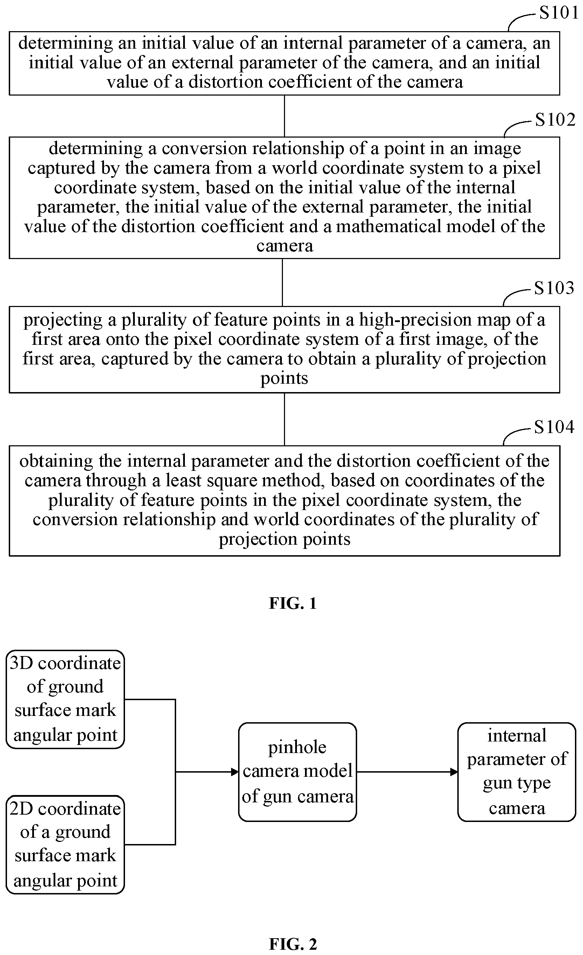

An embodiment of the present disclosure provides a camera calibration method. FIG. 1 shows a flowchart block diagram of a camera calibration method of an embodiment of the present disclosure. The method includes:

S101, determining an initial value (K) of an internal parameter of a camera, an initial value (R, t) of an external parameter of the camera, and an initial value (k1 and k2 are 0) of a distortion coefficient of the camera;

S 102, determining a conversion relationship of a point in an image captured by the camera from a world coordinate system to a pixel coordinate system, based on the initial value of the internal parameter, the initial value of the external parameter, the initial value of the distortion coefficient and a mathematical model of the camera;

S103, projecting a plurality of feature points in a high-precision map of a first area onto the pixel coordinate system of a first image, of the first area, captured by the camera to obtain a plurality of projection points; and

S104, obtaining the internal parameter and the distortion coefficient of the camera through a least square method, based on coordinates of the plurality of feature points in the pixel coordinate system, the conversion relationship and world coordinates of the plurality of projection points.

According to the embodiment of the present disclosure, a calibration process of the camera does not depend on an image of a checkerboard captured by the camera, such that the embodiment of the present disclosure do not require the use of a calibration plate, thus greatly saving labor cost and time cost. In the embodiment of the present disclosure, initial values of a plurality of parameters are firstly determined, including the initial value of the internal parameter of the camera, the initial value of the external parameter of the camera, and the initial value of the distortion coefficient of the camera; and then the initial values may be substituted into the mathematical model of the camera, e. g., the gun camera may use "a pinhole camera projection model" and the fisheye camera may use "an isometric projection model", such that a conversion relational expression may be obtained through certain simplification processing, where the conversion relational expression indicates the conversion relationship of the point in the image captured by the camera from the world coordinate system to the pixel coordinate system, thus preparing for subsequent processing.

In the embodiment of the present disclosure, world coordinate data carried in a high-precision map is required to be used, and a use manner includes that: in a case where the capturing view field of a camera includes the first area, a plurality of feature points (such as lane line angular points and road edge points) are selected in the high-precision map of the first area, the plurality of feature points are projected onto the image, of the first area, captured by the camera, such that a plurality of projection points can be formed; since the plurality of projection points and the selected plurality of feature points are in the same area, the selected plurality of feature points also exist in the image of the first area; since the camera does not finish calibration, the feature points in the image of the first area are separated from the projection points obtained by projecting the feature points from the high-precision map onto the image by a certain distance, and the feature points cannot coincide with the corresponding projection points. In order to enable the feature points to coincide with the corresponding projection points, the embodiment of the present disclosure perform processing through the least square method, where coordinate data of the projection points in the pixel coordinate system may be obtained according to the conversion relationship of the point in the image captured by the camera from the world coordinate system to the pixel coordinate system, such that a distance between the feature points in the image and the corresponding projection points is reduced, and iterative processing is performed through the least square method so as to obtain values of the internal parameter and distortion coefficient of the camera, thus achieving the camera calibration.

It may be seen that the camera calibration method of the embodiment of the present disclosure does not require assistance of the calibration plate in a whole process, but intelligently uses a corresponding relationship between the high-precision map and the image captured by the camera to establish an least square optimization algorithm, and may finally obtain the required internal parameter and distortion coefficient of the camera; therefore, the camera calibration method of the embodiment of the present disclosure saves the cost, conveniently and fast performs the processing and has high operation efficiency.

In the embodiment of the present disclosure, optionally, the initial value of the internal parameter may be determined according to configuration parameters of the camera. Optionally, the initial value of the internal parameter may be determined according to a focal length and an image resolution ratio of the camera. In the embodiment of the present disclosure, the initial value of the calibration parameter of the camera is set according to parameters of the camera itself, such that data is acquired conveniently and fast, and a processing result has high reliability.

In the invention, the camera is a gun type camera, the mathematical model of the camera is a pinhole camera projection model, internal parameters fx, fy, and f of the camera meet a condition of fx=fy=f, and an initial value of f may be calculated according to the following formula:

$$f/(w^2+h^2)^{0.5}=lens/(lenth/sensor\_size\_scale),$$

where lens represents a focal length of the camera, lenth represents a size parameter of the camera, sensor_size_scale represents a size and scale parameter of the camera, and w and h represent a width and a height of an image resolution ratio of the camera respectively.

In an example not covered by the claims, the camera is a fisheye camera, the mathematical model of the camera is an isometric projection model, internal parameters fx, fy, and f of the camera meet a condition of fx=fy=f, and an initial value of f may be calculated according to the following formula:

$$f=w/scale\_focal,$$

where w represents the number of horizontal pixels in an image resolution ratio of the camera, and scale_focal represents a scale for calculating an equivalent gun type camera focal length of the fisheye camera.

For any one of the above implementations, optionally, an initial value of cx among the internal parameters of the camera may be 1/2 times width of the image resolution ratio of the camera, and an initial value of cy among the internal parameters of the camera may be 1/2 times height of the image resolution ratio of the camera. Different types of cameras use different camera models, the embodiment of the present disclosure provide suitable initial values for the different models, such that a calibration result has high accuracy.

In the embodiment of the present disclosure, optionally, an angle of the camera may be adjusted according to positions of the plurality of feature points in the first image and positions of the plurality of projection points in the first image, such that the positions of the plurality of feature points correspond to the positions of the plurality of projection points, and the initial value of the external parameter of the camera may be determined according to the adjusted angle and an installation position parameter of the camera.

According to the embodiment of the present disclosure, in a case where a plurality of feature points in a junction image captured by the camera are a plurality of angular points on a lane line and these angular points are distributed on the lane line to form an array, a plurality of angular points at the same position of the same lane line at the same junction on the high-precision map are projected onto the junction image, then the projection points also form an array, an operator may adjust an angle (such as a pitch angle, an azimuth angle, and a roll angle) of the camera to enable an array direction of the feature points in the captured image to be consistent with an array direction of the projection points (at this time, the feature points do not coincide with the projection points). Therefore, an initial value of an external parameter rotation matrix may be obtained according to the adjusted angle, which is usually denoted as R; moreover, a world coordinate of an installation position of the camera may serve as an initial value of an external parameter translation vector, which is usually denoted as t; and the initial value of the distortion coefficient may also be set as 0, which may be denoted as k1=k2=0. In the embodiment of the present disclosure, the initial values of the calibration parameters of the camera is set intuitively and are easily obtained, and the calibration result has high accuracy.

The embodiments of the present disclosure may be applied to the fields of the intelligent transportation or vehicle and infrastructure cooperation. In the technical field of road side sensing, internal parameters of road side sensing gun type camera and fisheye camera, as basic parameters for sensing of the vehicle and infrastructure cooperation, are crucial to pre-processing, distortion eliminating, of the image and have a great influence on sensing precision of the vehicle and infrastructure cooperation. In a traditional method, the calibration of the internal parameter of the camera has high cost and occupies a large proportion in the total cost. By means of at least one of the embodiments of the present disclosure, a least square optimization algorithm may be established according to a camera model by means of the high-precision map, so as to realize self-calibration of an internal parameter of a vehicle and infrastructure cooperation road side camera, without extra collection of an image of a checkerboard calibration plate, such that manpower and material resources and time cost for calibration of the internal parameter of the camera can be obviously reduced.

The implementations and advantages of the camera calibration method in the embodiment of the present disclosure are described above. The specific processing process of the embodiment of the present disclosure will be described in detail with reference to specific examples below.

Embodiment 1: gun camera calibration

In the embodiment of the present disclosure, self-calibration of the internal parameter of the gun camera may be completed by using a three dimensional (3D) high-precision map and the pinhole camera projection model. FIG. 2 shows a schematic diagram of a process of the self-calibration of the internal parameter of the gun camera of the embodiment of the present disclosure.

Specifically, an internal parameter matrix K of the gun camera:

$$K = \begin{pmatrix} fx & 0.0 & cx \\ 0.0 & fy & cy \\ 0.0 & 0.0 & 1.0 \end{pmatrix}.$$

A pinhole camera model of the gun camera includes the following parameters:

the internal parameters of the gun camera: fx, fy, cx, and cy, where in a case of fx=fy=f, initial values of cx and cy may be half (central coordinates of the image) of the width of and half of the height of the image resolution ratio of the gun camera respectively;

the distortion coefficient D=[k1, k2, 0.0, 0.0, 0.0]; and

the external parameter rotation matrix R and the external parameter translation vector t.

According to the pinhole camera model of the gun camera, there is:

$$\begin{pmatrix} xc \\ yc \\ zc \end{pmatrix} = R \begin{pmatrix} Xw \\ Yw \\ Zw \end{pmatrix} + t;$$

where (Xw, Yw, Zw) represents a 3D coordinate of a ground surface mark angular point (feature point). A coordinate (xc, yc, zc) in a camera coordinate system may be calculated through the external parameter rotation matrix R and the external parameter translation vector t, and distortion addition processing is performed after normalization according to the following formulas:

$$xc\_d = xc1 \times (1 + k1 \times r^2 + k2 \times r^4),$$

and

$$yc\_d = yc1 \times (1 + k1 \times r^2 + k2 \times r^4),$$

where xc1 and yc1 represent normalized coordinates of an angular point in the camera coordinate system, and there is $r^2 = xc1^2 + yc1^2$; and

$$u = fx \times xc\_d + cx,$$

$$v = fy \times yc\_d + cy,$$

and

$$\begin{pmatrix} u \\ v \\ 1 \end{pmatrix} = K \begin{pmatrix} xc\_d \\ yc\_d \\ 1 \end{pmatrix},$$

where (u, v) represents a two dimensional (2D) coordinate of an angular point in an original image.

Known parameters of the gun camera include: an actual focal length lens of the gun camera, a size parameter lenth of an image sensor, a size and scale parameter sensor_size_scale of the image sensor, and the height and the width of the image resolution ratio of the gun camera, which are expressed as height (h) and width (w) resepectively.

In the invention, the initial value of the parameter f in the internal parameter matrix may be obtained according to the following formula:

$$f / (w^2 + h^2)^{0.5} = lens / (lenth / sensor\_size\_scale).$$

According to the installation position parameter (which may be collected by a real-time kinematic (RTK) device during construction and installation of the camera) of the gun camera, initial values of the external parameters R and t of the gun camera may be obtained by using a matching relationship of projecting the point of the high-precision map onto the image.

The above parameters and initial values are input into the least square optimization algorithm established by the pinhole camera model of the gun camera, and finally the internal parameters (the internal parameter matrix and the distortion coefficient) of the gun camera may be calculated as follows:

$$\begin{pmatrix} u \\ v \\ 1 \end{pmatrix} = K(DIST[R\begin{pmatrix} Xw \\ Yw \\ Zw \end{pmatrix} + t]), \text{ and} \qquad \textcircled{1}$$

$$loss = \sum_{i=1}^{m} \left\| \begin{pmatrix} uo_i \\ vo_i \\ 1 \end{pmatrix} - K\left( DIST\left[ R\begin{pmatrix} Xw_i \\ Yw_i \\ Zw_i \end{pmatrix} + t \right] \right) \right\|_2 ; \qquad \textcircled{2}$$

where loss represents a loss function, m is a positive integer, *uo, vo* represents the coordinate of a feature point in the pixel coordinate system, and DIST ( ) represents the distortion addition processing on the point in the camera coordinate system (for the gun camera, DIST( ) includes $xc\_d = xc1 \times (1 + k1 \times r^2 + k2 \times r^4)$, $yc\_d = yc1 \times (1 + k1 \times r^2 + k2 \times r^4$, and $r^2 = xc1^2 + yc1^2$).

In an embodiment of the present disclosure, known basic parameters of the gun type camera include:

lens=12.0 mm, lenth = 16.0 mm, sensor_size_scale = 1.8, and
the image resolution ratio being 1920x1080, that is, w= 1920 and h=1080; and
f=2974.05 may be obtained according to $f/(w^2+h^2)^{0.5}=$ lens/(lenth/sensor_size_scale).

Initial parameters of the gun type camera include:

K:[2974.05,0.000000,960.0,0.000000,2974.05,540.0,0.000000,0.000000, 1.000000], and
D:[0.0,0.0,0.0,0.0,0.0].

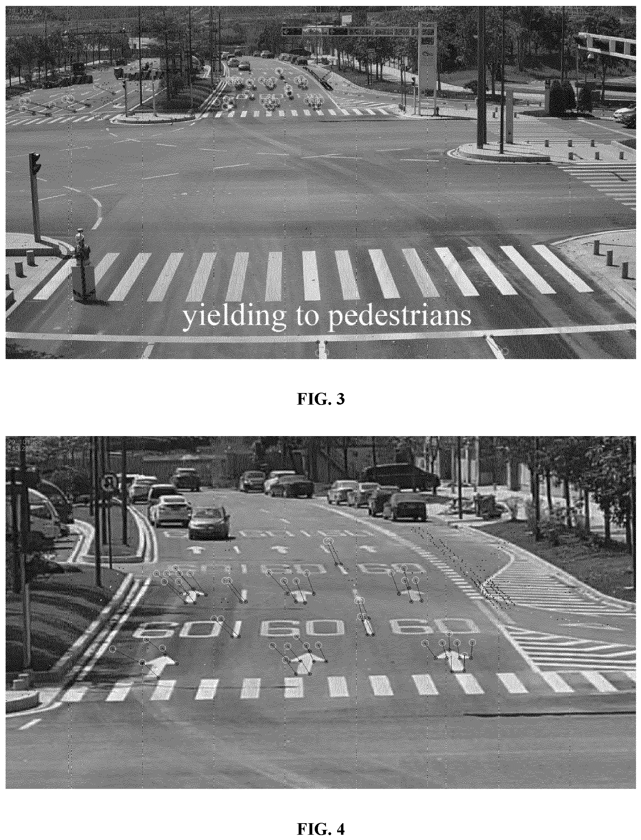

By using the initial parameters K and D and initial position and direction of the camera, projection points obtained by projecting the high-precision map onto the image (shown as dots in FIG. 3) are obtained, the angle of the gun camera is slightly adjusted to enable corresponding positions in the high-precision map and the image to be basically aligned, and then a 2D coordinate of the image is connected to the corresponding projection point of the 3D coordinate of the high-precision map to obtain a 2D-3D point pair, as shown in FIG. 3. A partially enlarged diagram is shown in FIG. 4.

By means of the established least square optimization algorithm, the internal parameter f of the camera, the distortion coefficients k1 and k2 of the camera, and the external parameters R and t of the camera are optimized, and finally optimal solutions of the internal parameter f of the camera and the distortion coefficients k1 and k2 of the camera may be obtained through iterative optimization, specifically,

f = 2809.739776, k1 = -0.314813, and k2 = 0.191444, that is
K: [2809.739776, 0.0, 960, 0.0, 2809.739776, 540, 0.0, 0.0, 1.0], and
D: [-0.314813, 0.191444, 0.0, 0.0, 0.0].

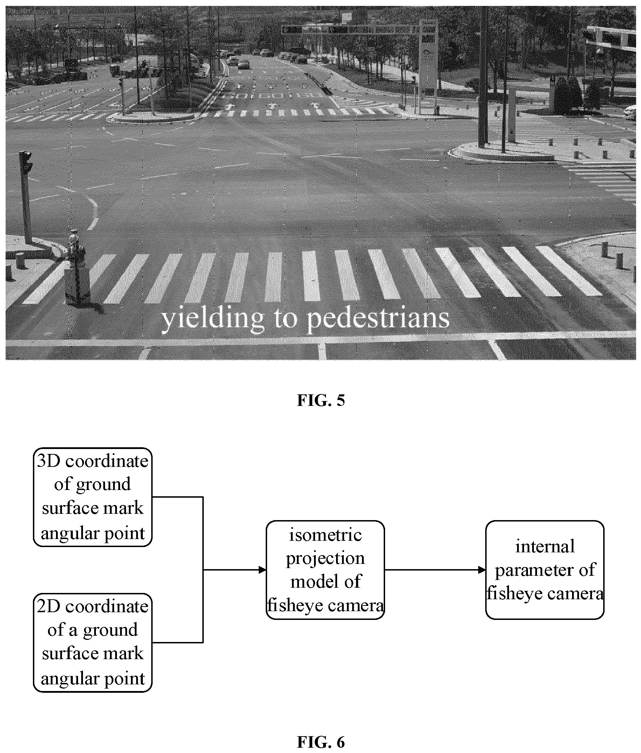

An image subjected to the distortion eliminating is shown in FIG. 5.
Additional example: fisheye camera calibration
In this example, self-calibration of the internal parameter of the fisheye camera may be completed by using a 3D high-precision map and the isometric projection model. FIG. 6 shows a schematic diagram of a process of the self-calibration of the internal parameter of the fisheye camera in the embodiment of the present disclosure. Specifically, the internal parameter matrix K of the fisheye camera is:

$$K = \begin{pmatrix} fx & 0.0 & cx \\ 0.0 & fy & cy \\ 0.0 & 0.0 & 1.0 \end{pmatrix}.$$

Parameters of the isometric projection model of the fisheye camera include: focal lengths fx, fy, cx and cy of the fisheye camera and the distortion coefficient D=[k1,k2,k3,k4]. For the same type of the fisheye camera, initial values of the focal lengths fx and fy are both f, that is fx=fy=f, initial values of cx and cy are half (central coordinates of the image) of the width and the height of the image resolution ratio of the camera respectively, and in the distortion coefficient D, k3 and k4 are set as 0, and D=[k1,k2,0.0,0.0], where initial values of k1 and k2 are 0.0.

According to the isometric projection model of the fisheye camera, there are:

$$pc = R \times p3d + t;$$

$$x = pc[0];$$

$$y = pc[1];$$

and

$$z = pc[2],$$

where p3d represents a 3D coordinate of a ground surface mark angular point in the high-precision map, pc represents a coordinate of the ground surface mark angular point in the camera coordinate system, pc[0] represents a first-dimensional coordinate of the ground surface mark angular point, pc[1] represents a second-dimensional coordinate of the ground surface mark angular point, and pc[2] represents a third-dimensional coordinate of the ground surface mark angular point; and distortion addition processing is performed on the point in the camera coordinate system according to the following formulas:

$$r\_2 = (x / z) \times (x / z) + (y / z) \times (y / z);$$

$$r = \mathrm{sqrt}(r\_2);$$

$$\theta = \arctan(r);$$

$$\theta\_d = \theta \times (1 + k1 \times \theta^2 + k2 \times \theta^4);$$

$$u\_d = fx \times (\theta\_d / r) \times x / z + cx;$$

and

$$v\_d = fy \times (\theta\_d / r) \times y / z + cy,$$

where (u_d, v_d) represents a pixel coordinate of the ground surface mark angular point projected onto an original fisheye image, and then is compared with a pixel coordinate of the ground surface mark angular point on the original fisheye image to calculate an error, and the least square optimization algorithm is established by using the above parameters and the initial values, which is the same as formulas ① and formula ②. For the fisheye camera, the distortion addition processing DIST( ) includes $r\_2 = (x / z) \times (x / z) + (y / z) \times (y / z)$, $r = \mathrm{sqrt}(r\_2)$, $\theta = \arctan(r)$, and $\theta\_d = \theta \times (1 + k1 \times \theta^2 + k2 \times \theta^4)$, and finally a new internal parameter matrix K and a new distortion coefficient D of the fisheye camera may be calculated.

In this example, known initial parameters of the fisheye camera include:

K: [337.0, 0.000000, 640.0, 0.000000, 337.0, 640.0, 0.000000, 0.000000, 1.000000],

D:[0.0,0.0,0.0,0.0], and

the image resolution ratio of the fisheye camera being 1280x1280.

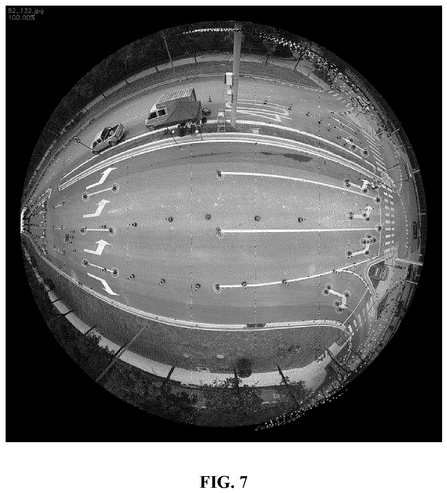

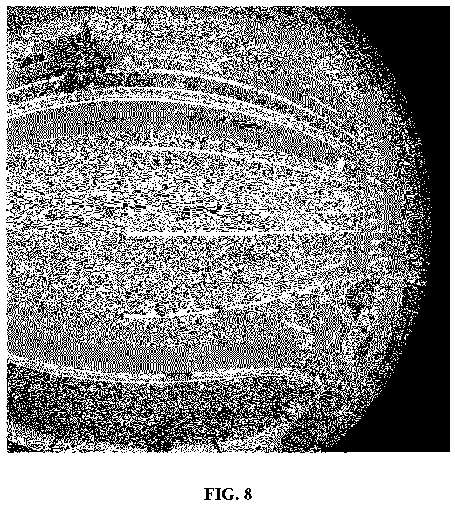

By using the initial parameters K and D and initial position and direction of the camera, projection points obtained by projecting the high-precision map onto the image (shown as dots in FIG. 7) may be obtained, the angle of the fisheye camera is slightly adjusted to enable corresponding positions in the high-precision map and the image to be basically aligned, and then a 2D coordinate of the image is connected to the corresponding projection points of the 3D coordinate of the high-precision map to obtain a 2D-3D point pair, as shown in FIG. 7. A partially enlarged diagram is shown in FIG. 8.

Then, by means of the established least square optimization algorithm, the internal parameters, the distortion coefficients k1 and k2, and the external parameters R and t of the camera are optimized, and finally optimal solutions of the distortion coefficients k1 and k2 of the camera are obtained through iterative optimization, specifically, k1 = 0.065810 and k2 = -0.006342 are set, and therefore, there is D: [0.065810, -0.006342, 0.0, 0.0].

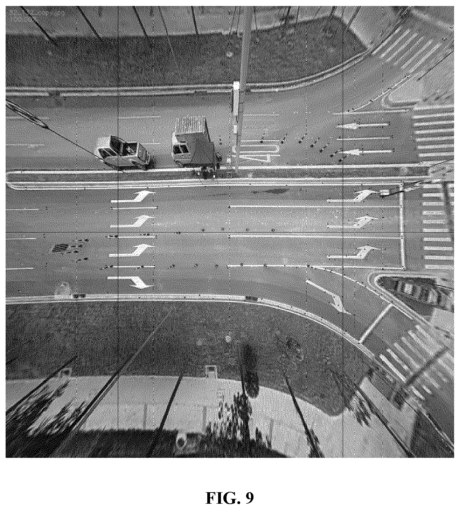

An image subjected to the distortion eliminating is shown in FIG. 9.

According to at least one of the examples of the present disclosure, the self-calibration of the internal parameter of the camera may be achieved by using the 3D high-precision map, such that an internal parameter calibration process of a traditional calibration method is omitted, and the delivery cost of the calibration of the internal parameter of the camera is reduced.

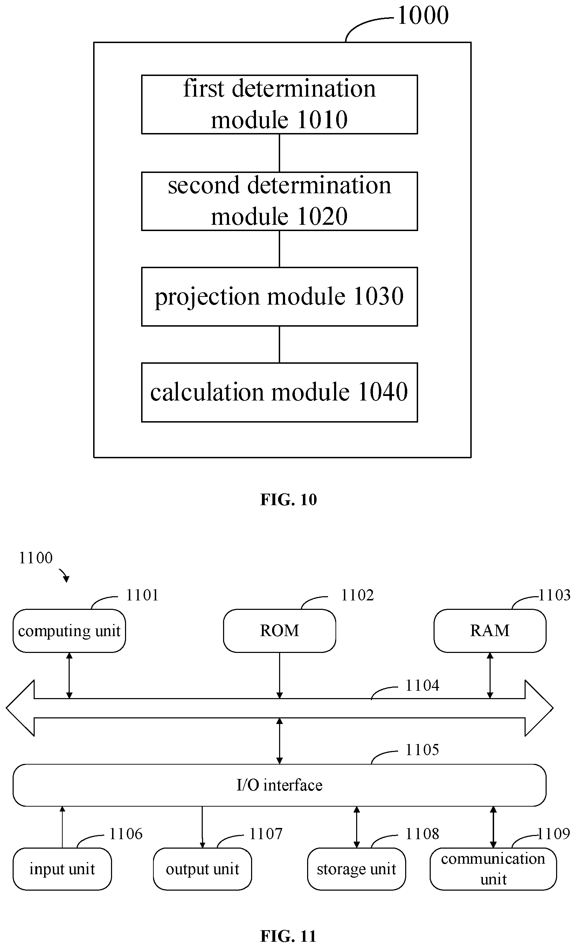

The specific arrangement and implementations of the embodiments of the present disclosure are described from different angles by means of a plurality of embodiments above. Corresponding to a processing method in at least one embodiment, an embodiment of the present disclosure further provides a camera calibration apparatus 1000. With reference to FIG. 10, the apparatus includes:

a first determination module 1010, configured for determining an initial value of an internal parameter of a camera, an initial value of an external parameter of the camera, and an initial value of a distortion coefficient of the camera;

a second determination module 1020, configured for determining a conversion relationship of a point in an image captured by the camera from a world coordinate system to a pixel coordinate system, based on the initial value of the internal parameter, the initial value of the external parameter, the initial value of the distortion coefficient and a mathematical model of the camera;

a projection module 1030, configured for projecting a plurality of feature points in a high-precision map of a first area onto the pixel coordinate system of a first image, of the first area, captured by the camera to obtain a plurality of projection points; and

a calculation module 1040, configured for obtaining the internal parameter and the distortion coefficient of the camera through a least square method, based on coordinates of the plurality of feature points in the pixel coordinate system, the conversion relationship and world coordinates of the plurality of projection points.

Optionally, the first determination module determines the initial value of the internal parameter according to configuration parameters of the camera.

Optionally, the configuration parameters include a focal length and an image resolution ratio of the camera.

The camera is a gun type camera, the mathematical model of the camera is a pinhole camera projection model, internal parameters fx, fy, and f of the camera meet a condition of fx=fy=f, and the first determination module calculates an initial value of f according to a following formula: $f/(w^2+h^2)^{0.5}$=lens/(lenth/sensor_size_scale), where lens represents a focal length of the camera, lenth represents a size parameter of the camera, sensor_size_scale represents a size and scale parameter of the camera, and w and h represent a width and a height of an image resolution ratio of the camera respectively.

In an example not covered by the claims, the camera is a fisheye camera, the mathematical model of the camera is an isometric projection model, internal parameters fx, fy, and f of the camera meet a condition of fx=fy=f, and the first determination module calculates an initial value of f according to a following formula: f=w/scale_focal, where w represents the number of horizontal pixels in an image resolution ratio of the camera, and scale_focal represents a scale for calculating an equivalent gun type camera focal length of the fisheye camera.

Optionally, an initial value of cx among the internal parameters of the camera is 1/2 times width of the image resolution ratio of the camera, and an initial value of cy among the internal parameters of the camera is 1/2 times height of the image resolution ratio of the camera.

Optionally, the first determination module adjusts an angle of the camera according to positions of the plurality of feature points in the first image and positions of the plurality of projection points in the first image, such that the positions of the plurality of feature points correspond to the positions of the plurality of projection points, and the first determination module determines the initial value of the external parameter of the camera according to the adjusted angle and an installation position parameter of the camera.

By means of the camera calibration apparatus 1000 of the embodiment of the present disclosure, for a large number of traditional traffic monitoring electric police cameras existing on a road at present, it is not necessary to spend manpower and material resources in disassembling the electric police cameras for the calibration of the internal parameter of the camera, but the self-calibration of the internal parameter may be directly performed on the electric police cameras based on the camera calibration apparatus 1000 for the road side sensing of the vehicle and infrastructure cooperation. Therefore, optimizing and upgrading existing electric police camera resources to maximize compatibility and make use of the old can have an active effect, thus greatly reducing capital investment and time investment in construction of intelligent transportation road facilities, and accelerating development and popularization of the intelligent transportation industry.

An embodiment of the present disclosure further provides an electronic device. As shown in FIG. 11, the electronic device 1100 includes: one or more processors 1101, a memory 1102, and interfaces for connecting all components, which include a high-speed interface and a low-speed interface. All the components are connected to one another by using different buses, and may be installed on a common mainboard or in other ways as required. The processor may process instructions executed in the electronic device, which include instructions stored in or on the memory to display graphical information of a graphical user interface (GUI) on an external input/output device (such as a display device coupled to the interface). In other implementations, a plurality of processors and/or a plurality of buses may be used with a plurality of memories, if desired. Similarly, a plurality of electronic devices may be connected, and each device provides some necessary operations (e. g., serving as a server array, a group of blade servers, or a multiprocessor system). In FIG. 11, a processor 1101 is taken as an example.

The memory 1102 is a non-transitory computer-readable storage medium provided by the present disclosure. The memory stores instructions executable by the at least one processor to enable the at least one processor to perform the camera calibration method provided by the present disclosure. The non-transitory computer-readable storage medium of the present disclosure stores computer instructions, and the computer instructions, when executed by a computer, enable the computer to perform the camera calibration method provided by the present disclosure.

As a non-transitory computer-readable storage medium, the memory 1102 may be used to store a non-transitory software program, a non-transitory computer executable program and module, such as a program instruction/module corresponding to the camera calibration method in the embodiment of the present disclosure. The processor 1101 executes various functional applications and data processing of a server by running the non-transitory software program, instructions and module stored in the memory 1102, that is, the camera calibration method in the above method embodiment is achieved.

The memory 1102 may include a program storage area and a data storage area, where the program storage area may store an operating system, an application program required for at least one function; and the data storage area may store data, etc. created according to usage of an analyzing and processing electronic device of a search result. Moreover, the memory 1102 may include a high-speed random access memory, and may further include a non-transitory memory, e. g., at least one magnetic disk memory device, a flash memory device, or other non-transitory solid-state memory devices. In some embodiments, the memory 1102 may optionally include memories remotely arranged with respect to the processor 1101, and there remote memories may be connected with the analyzing and processing electronic device of the search result by means of a network. Examples of networks described above include, but not limited to, the Internet, enterprise intranets, local area networks, mobile communication networks, and combinations thereof.

The electronic device corresponding to the camera calibration method of the embodiment of the present disclosure may further include: an input device 1103 and an output device 1104. The processor 1101, the memory 1102, the input device 1103 and the output device 1104 may be connected by means of buses or in other ways. In the embodiment of FIG. 11 of the present disclosure, bus connection is taken as an example.

The input device 1103 may receive input digital or character information and generate key signal input related to user settings and function control of the analyzing and processing electronic device of the search result, such as a touch screen, a keypad, a mouse, a track pad, a touch pad, an indication rod, one or more mouse buttons, a trackball, a joystick and other input devices. The output devices 1104 may include a display device, an auxiliary lighting apparatus (e. g., a light emitting diode (LED)), a tactile feedback apparatus (e. g., a vibration motor), etc. The display device may include, but be not limited to, a liquid crystal display (LCD), an LED display, and a plasma display. In some implementations, the display device may be a touch screen.

An embodiment of the present disclosure further provides a road side device. The road side device may include the above-mentioned electronic device.

Optionally, in addition to including the electronic device, the road side device may also include a communication component, etc. The electronic device may be integrated with the communication component as a whole or separately arranged. The electronic device may acquire data of a sensing device (such as a road side camera), such as pictures and videos, so as to perform image and video processing and data calculation. Optionally, the electronic device itself may also have a sensing data acquisition function and a communication function, such as an artificial intelligence (AI) camera, and the electronic device may directly perform the image and video processing and data calculation based on the acquired sensing data.

Various implementations of the systems and techniques described in the embodiment of the present disclosure may be implemented in a digital electronic circuit system, an integrated circuit system, an application specific integrated circuit (ASIC), computer hardware, firmware, software, and/or a combination thereof. These various implementations may include: an implementation in one or more computer programs, which may be executed and/or interpreted on a programmable system including at least one programmable processor, where the programmable processor may be a dedicated or general-purpose programmable processor and be capable of receiving and transmitting data and instructions from and to a storage system, at least one input device, and at least one output device.

Calculation programs (also called as programs, software, software applications, or codes) include machine instructions of a programmable processor, and may be implemented by using high-level processes and/or object-oriented programming languages, and/or assembly/machine languages. As used herein, the terms "machine-readable medium" and "computer-readable medium" refer to any computer program product, device, and/or apparatus (e. g., a magnetic disk, an optical disk, a memory, a programmable logic device (PLD)) for providing machine instructions and/or data to a programmable processor, including a machine-readable medium receiving machine instructions as a machine-readable signal. The term "machine-readable signal" refers to any signal for providing machine instructions and/or data to a programmable processor.

In order to provide an interaction with a user, the system and technology described herein may be implemented on a computer having: a display apparatus (e. g., a cathode ray tube (CRT) or an LCD monitor) for displaying information to the user; and a keyboard and a pointing apparatus (e. g., a mouse or a trackball), through which the user may provide input to the computer. Other kinds of apparatuses may also provide an interaction with the user. For example, a feedback provided to the user may be any form of sensory feedback (e.g., visual feedback, auditory feedback, or tactile feedback); and input from the user may be received in any form (including acoustic input, voice input or tactile input).

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with implementations of the systems and techniques described herein) that may include a front-end component, or a computing system that may include any combination of such background component, middleware component, or front-end component. The components of the system may be connected to each other through a digital data communication in any form or medium (e.g., a communication network). Examples of the communication network may include a local area network (LAN), a wide area network (WAN), and the Internet.

A computer system may include a client and a server. The client and the server are typically remote from each other and typically interact via the communication network. The relationship of the client and the server is generated by computer programs running on respective computers and having a client-server relationship with each other.

It should be understood that the operations may be reordered, added or deleted by using the various flows illustrated above. For example, the operations described in the present disclosure may be performed concurrently, sequentially or in a different order, so long as the desired results of the technical solutions provided in the present disclosure can be achieved, and there is no limitation herein. The above specific implementations do not limit the scope of the present disclosure. It will be apparent to those skilled in the art that various modifications, combinations, sub-combinations and substitutions are possible, depending on design requirements and other factors, as long as these are covered by the appended claims which solely defines the invention.

**Claims**

1. A camera calibration method, comprising:

Determining (S101) an initial value of an internal parameter of a camera, an initial value of an external parameter of the camera, and an initial value of a distortion coefficient of the camera;
determining (S102) a conversion relationship of a point in an image captured by the camera from a world coordinate system to a pixel coordinate system, based on the initial value of the internal parameter, the initial value of the external parameter, the initial value of the distortion coefficient and a mathematical model of the camera;
projecting (S103) a plurality of feature points in a high-precision map of a first area onto the pixel coordinate system of a first image, of the first area, captured by the camera to obtain a plurality of projection points; and
obtaining (S104) the internal parameter and the distortion coefficient of the camera through a least square method, based on coordinates of the plurality of feature points in the pixel coordinate system, the conversion relationship and world coordinates of the plurality of projection points
wherein the camera is a gun type camera, the mathematical model of the camera is a pinhole camera projection model, internal parameters fx, fy, and f of the camera meet a condition of fx=fy=f, and an initial value of f is calculated according to a following formula:

$$f/(w^2+h^2)^{0.5}=\text{lens}/(\text{lenth}/\text{sensor\_size\_scale}),$$

wherein lens represents a focal length of the camera, lenth represents a size parameter of the camera, sensor_size _scale represents a size and scale parameter of the camera, and w and h represent a width and a height of an image resolution ratio of the camera respectively.

2. The method of claim 1, wherein the determining the initial value of the internal parameter of the camera, comprises: determining the initial value of the internal parameter according to configuration parameters of the camera.

3. The method of claim 2, wherein the configuration parameters comprise a focal length and an image resolution ratio of the camera.

4. The method of claim 1, wherein an initial value of cx among the internal parameters of the camera is 1/2 times width of the image resolution ratio of the camera, and an initial value of cy among the internal parameters of the camera is 1/2 times height of the image resolution ratio of the camera.

5. The method of any one of claims 1 to 4, wherein the determining the initial value of the external parameter of the camera comprises: adjusting an angle of the camera according to positions of the plurality of feature points in the first image and positions of the plurality of projection points in the first image, such that the positions of the plurality of feature points correspond to the positions of the plurality of projection points, and determining the initial value of the external parameter of the camera according to the adjusted angle and an installation position parameter of the camera.

6. A camera calibration apparatus, comprising:

a first determination module (1010), configured for determining an initial value of an internal parameter of a camera, an initial value of an external parameter of the camera, and an initial value of a distortion coefficient of the camera;
a second determination module (1020), configured for determining a conversion relationship of a point in an image captured by the camera from a world coordinate system to a pixel coordinate system, based on the initial value of the internal parameter, the initial value of the external parameter, the initial value of the distortion coefficient and a mathematical model of the camera;
a projection module (1030), configured for projecting a plurality of feature points in a high-precision map of a first area onto the pixel coordinate system of a first image, of the first area, captured by the camera to obtain a plurality of projection points; and
a calculation module (1040), configured for obtaining the internal parameter and the distortion coefficient of the camera through a least square method, based on coordinates of the plurality of feature points in the pixel coordinate system, the conversion relationship and world coordinates of the plurality of projection points
wherein the camera is a gun type camera, the mathematical model of the camera is a pinhole camera projection model, internal parameters fx, fy, and f of the camera meet a condition of fx=fy=f, and the first determination module (1010) calculates an initial value of f according to a following formula:

$$f/(w^2+h^2)^{0.5}=\text{lens}/(\text{lenth}/\text{sensor\_size\_scale}),$$

wherein lens represents a focal length of the camera, lenth represents a size parameter of the camera, sensor_size _scale represents a size and scale parameter of the camera, and w and h represent a width and a height of an image resolution ratio of the camera respectively.

7. The apparatus of claim 6, wherein the first determination module (1010) determines the initial value of the internal parameter according to configuration parameters of the camera;
optionally, the configuration parameters comprise a focal length and an image resolution ratio of the camera.

8. The apparatus of claim 6 or 7, wherein an initial value of cx among the internal parameters of the camera is 1/2 times width of the image resolution ratio of the camera, and an initial value of cy among the internal parameters of the camera is 1/2 times height of the image resolution ratio of the camera.

9.  The apparatus of claim 8, wherein the first determination module (1010) adjusts an angle of the camera according to positions of the plurality of feature points in the first image and positions of the plurality of projection points in the first image, such that the positions of the plurality of feature points correspond to the positions of the plurality of projection points, and the first determination module (1010) determines the initial value of the external parameter of the camera according to the adjusted angle and an installation position parameter of the camera.

10. An electronic device, comprising:

    at least one processor; and
    a memory communicatively connected with the at least one processor;
    wherein the memory stores instructions executable by the at least one processor, and the instructions, when executed by the at least one processor, enable the at least one processor to perform the method of any one of claims 1 to 5.

11. A non-transitory computer-readable storage medium storing computer instructions, wherein the computer instructions, when executed by a computer, case the computer to perform the method of any one of claims 1 to 5.

12. A computer program product comprising a computer program, wherein the computer program, when executed by a processor, implements the method of any one of claims 1 to 5.

13. A road side device, comprising the electronic device of claim 10.


**Patentansprüche**

1.  Ein Kamerakalibrierungsverfahren, umfassend:

    Ermittlung (S101) eines Anfangswerts eines internen Parameters einer Kamera, eines Anfangswerts eines externen Parameters der Kamera und eines Anfangswerts eines Verzerrungskoeffizienten der Kamera;
    Ermittlung (S102) einer Umwandlungsbeziehung eines Punkts in einem Bild, das mittels der Kamera erfasst wurde, von einem Weltkoordinatensystem zu einem Pixelkoordinatensystem basierend auf dem Anfangswert des internen Parameters, dem Anfangswert des externen Parameters, dem Anfangswert des Verzerrungskoeffizienten und einem mathematischen Modell der Kamera;
    Projektion (S103) einer Mehrzahl von Merkmalspunkten in einer Hochpräzisionskarte eines ersten Bereichs auf das Pixelkoordinatensystem eines ersten Bilds, des ersten Bereichs, erfasst mittels der Kamera, um eine Mehrzahl von Projektionspunkten zu erhalten; und
    Erhalten (S104) der internen Parameter und des Verzerrungskoeffizienten der Kamera durch ein Verfahren der kleinsten Quadrate, basierend auf Koordinaten der Mehrzahl von Merkmalspunkten in dem Pixelkoordinatensystem, der Umwandlungsbeziehung und Weltkoordinaten der Mehrzahl von Projektionspunkten,
    wobei die Kamera eine pistolenartige Kamera ist, das mathematische Modell der Kamera ein Lochkameraprojektionsmodell ist, interne Parameter fx, fy und f der Kamera eine Bedingung fx=fy=f erfüllen und ein Anfangswert von f gemäß einer folgenden Formel berechnet ist:

    $$f/(w^2 + h^2)^{0,5} = Linse/(L\ddot{a}nge/Sensor\_Gr\ddot{o}{\ss}e\_Skalierung),$$

    wobei Linse eine Brennweite der Kamera repräsentiert, Länge einen Größenparameter der Kamera repräsentiert, Sensor_Größe_Skalierung einen Größen- und Skalierungsparameter der Kamera repräsentiert und w und h jeweils eine Breite und eine Höhe eines Bildauflösungsverhältnisses der Kamera repräsentiert.

2.  Das Verfahren gemäß Anspruch 1, wobei die Ermittlung des Anfangswerts des internen Parameters der Kamera umfasst: Ermittlung des Anfangswerts des internen Parameters gemäß einem Konfigurationsparameter der Kamera.

3.  Das Verfahren gemäß Anspruch 2, wobei die Konfigurationsparameter eine Brennweite und ein Bildauflösungsverhältnis der Kamera umfassen.

**4.** Das Verfahren gemäß Anspruch 1, wobei ein Anfangswert von cx unter den internen Parametern der Kamera ½ mal die Breite des Bildauflösungsverhältnisses der Kamera ist und ein Anfangswert von cy unter den internen Parametern der Kamera ½ mal die Höhe des Bildauflösungsverhältnisses der Kamera ist.

**5.** Das Verfahren gemäß einem der Ansprüche 1 bis 4, wobei die Ermittlung des Anfangswerts der externen Parameter der Kamera umfasst: Anpassung eines Winkels der Kamera gemäß Positionen der Mehrzahl von Merkmalspunkten in dem ersten Bild und Positionen der Mehrzahl von Projektionspunkten in dem ersten Bild, sodass die Positionen der Mehrzahl von Merkmalspunkten den Positionen der Mehrzahl von Projektionspunkten entsprechen, und Ermittlung des Anfangswerts des externen Parameters der Kamera gemäß dem angepassten Winkel und einem Installationspositionsparameter der Kamera.

**6.** Eine Kamerakalibrierungsvorrichtung, umfassend:

ein erstes Ermittlungsmodul (1010), das eingerichtet ist zur Ermittlung eines Anfangswerts eines internen Parameters einer Kamera, eines Anfangswerts eines externen Parameters der Kamera und eines Anfangswerts eines Verzerrungskoeffizienten der Kamera;
ein zweites Ermittlungsmodul (1020), das eingerichtet ist zur Ermittlung einer Umwandlungsbeziehung eines Punkts in einem Bild, das mittels der Kamera erfasst wurde, von einem Weltkoordinatensystem zu einem Pixelkoordinatensystem, basierend auf dem Anfangswert des internen Parameters, dem Anfangswert des externen Parameters, dem Anfangswert des Verzerrungskoeffizienten und einem mathematischen Modell der Kamera;
einem Projektionsmodul (1030), das eingerichtet ist zur Projektion einer Mehrzahl von Merkmalspunkten in einer Hochpräzisionskarte eines ersten Bereichs auf das Pixelkoordinatensystem eines ersten Bilds, des ersten Bereichs, erfasst mittels der Kamera, um eine Mehrzahl von Projektionspunkten zu erhalten; und
ein Berechnungsmodul (1040), das eingerichtet ist zum Erhalten (S104) der internen Parameter und des Verzerrungskoeffizienten der Kamera durch ein Verfahren der kleinsten Quadrate, basierend auf Koordinaten der Mehrzahl von Merkmalspunkten in dem Pixelkoordinatensystem, der Umwandlungsbeziehung und Weltkoordinaten der Mehrzahl von Proj ektionspunkten,
wobei die Kamera eine pistolenartige Kamera ist, das mathematische Modell der Kamera ein Lochkameraprojektionsmodell ist, interne Parameter fx, fy und f der Kamera eine Bedingung fx=fy=f erfüllen und das erste Ermittlungsmodul (1010) einen Anfangswert von f gemäß einer folgenden Formel berechnet:

$$f/(w^2 + h^2)^{0,5} = Linse/(L\ddot{a}nge/Sensor\_Gr\ddot{o}\beta e\_Skalierung),$$

wobei Linse eine Brennweite der Kamera repräsentiert, Länge einen Größenparameter der Kamera repräsentiert, Sensor_Größe_Skalierung einen Größen- und Skalierungsparameter der Kamera repräsentiert und w und h jeweils eine Breite und eine Höhe eines Bildauflösungsverhältnisses der Kamera repräsentiert.

**7.** Die Vorrichtung gemäß Anspruch 6, wobei das erste Ermittlungsmodul (1010) den Anfangswert des internen Parameters gemäß Konfigurationsparametern der Kamera ermittelt;
optional, die Konfigurationsparameter eine Brennweite und ein Bildauflösungsverhältnis der Kamera umfassen.

**8.** Die Vorrichtung gemäß Anspruch 6 oder 7, wobei ein Anfangswert von cx unter den internen Parametern der Kamera ½ mal die Breite des Bildauflösungsverhältnisses der Kamera ist und ein Anfangswert von cy unter den internen Parametern der Kamera ½ mal die Höhe des Bildauflösungsverhältnisses der Kamera ist.

**9.** Die Vorrichtung gemäß Anspruch 8, wobei das erste Ermittlungsmodul (1010) einen Winkel der Kamera gemäß Positionen der Mehrzahl von Merkmalspunkten in dem ersten Bild und Positionen der Mehrzahl von Projektionspunkten in dem ersten Bild anpasst, sodass die Positionen der Mehrzahl von Merkmalspunkten den Positionen der Mehrzahl von Projektionspunkten entsprechen, und das erste Ermittlungsmodul (1010) den Anfangswert des externen Parameters der Kamera gemäß dem angepassten Winkel und einem Installationspositionsparameter der Kamera ermittelt.

**10.** Eine elektronische Vorrichtung, umfassend:

mindestens einen Prozessor; und
einen Speicher, der kommunikativ mit dem mindestens einen Prozessor verbunden ist; wobei der Speicher Instruktionen, die mittels des mindestens einen Prozessors ausführbar sind, speichert, und die Instruktionen, wenn mittels des mindestens einen Prozessors ausgeführt, den mindestens einen Prozessor befähigen, das Verfahren gemäß einem der Ansprüche 1 bis 5 durchzuführen.

**11.** Ein nichtflüchtiges computerlesbares Speichermedium, das Computerinstruktionen speichert, wobei die Computerinstruktionen, wenn mittels eines Computers ausgeführt, den Computer veranlassen, das Verfahren gemäß einem der Ansprüche 1 bis 5 durchzuführen.

**12.** Ein Computerprogrammprodukt, umfassend ein Computerprogramm, wobei das Computerprogrammprodukt, wenn mittels eines Prozessors ausgeführt, das Verfahren gemäß einem der Ansprüche 1 bis 5 implementiert.

**13.** Eine Straßenrandvorrichtung, umfassend die elektronische Vorrichtung gemäß Anspruch 10.

**Revendications**

**1.** Procédé d'étalonnage de caméra, comprenant :

la détermination (S101) d'une valeur initiale d'un paramètre interne d'une caméra, d'une valeur initiale d'un paramètre externe de la caméra et d'une valeur initiale d'un coefficient de distorsion de la caméra ;
la détermination (S102) d'une relation de conversion d'un point dans une image capturée par la caméra d'un système de coordonnées mondiales à un système de coordonnées de pixels, sur la base de la valeur initiale du paramètre interne, de la valeur initiale du paramètre externe, de la valeur initiale du coefficient de distorsion et d'un modèle mathématique de la caméra ;
la projection (S103) d'une pluralité de points caractéristiques dans une carte de haute précision d'une première zone sur le système de coordonnées de pixels d'une première image, de la première zone, capturée par la caméra pour obtenir une pluralité de points de projection ; et
l'obtention (S104) du paramètre interne et du coefficient de distorsion de la caméra par une méthode des moindres carrés, sur la base de coordonnées de la pluralité de points caractéristiques dans le système de coordonnées de pixels, de la relation de conversion et de coordonnées mondiales de la pluralité de points de projection,
dans lequel la caméra est une caméra de type canon, le modèle mathématique de la caméra est un modèle de projection de caméra à sténopé, des paramètres internes fx, fy et f de la caméra répondent à une condition fx=fy=f, et une valeur initiale de f est calculée selon la formule suivante :

$$f/(w^2+h^2)^{0,5}=\texttt{lens}/(\texttt{lenth}/\texttt{sensor\_size\_scale}),$$

où *lens* représente une longueur focale de la caméra, *lenth* représente un paramètre de taille de la caméra, *sensor_size_scale* représente un paramètre de taille et d'échelle de la caméra, et w et h représentent respectivement une largeur et une hauteur d'un rapport de résolution d'image de la caméra.

**2.** Procédé selon la revendication 1, dans lequel la détermination de la valeur initiale du paramètre interne de la caméra comprend : la détermination de la valeur initiale du paramètre interne en fonction de paramètres de configuration de la caméra.

**3.** Procédé selon la revendication 2, dans lequel les paramètres de configuration comprennent une longueur focale et un rapport de résolution d'image de la caméra.

**4.** Procédé selon la revendication 1, dans lequel une valeur initiale de cx parmi les paramètres internes de la caméra est 1/2 fois la largeur du rapport de résolution d'image de la caméra, et une valeur initiale de cy parmi les paramètres internes de la caméra est 1/2 fois la hauteur du rapport de résolution d'image de la caméra.

**5.** Procédé selon l'une quelconque des revendications 1 à 4, dans lequel la détermination de la valeur initiale du paramètre externe de la caméra comprend : l'ajustement d'un angle de la caméra en fonction de positions de la pluralité de points caractéristiques dans la première image et de positions de la pluralité de points de projection dans la première image, de sorte que les positions de la pluralité de points caractéristiques correspondent aux positions de la pluralité de points de projection, et la détermination de la valeur initiale du paramètre externe de la caméra en fonction de l'angle ajusté et d'un paramètre de position d'installation de la caméra.

6. Appareil d'étalonnage de caméra, comprenant :

un premier module de détermination (1010), configuré pour déterminer une valeur initiale d'un paramètre interne d'une caméra, une valeur initiale d'un paramètre externe de la caméra et une valeur initiale d'un coefficient de distorsion de la caméra ;
un deuxième module de détermination (1020), configuré pour déterminer une relation de conversion d'un point dans une image capturée par la caméra d'un système de coordonnées mondiales à un système de coordonnées de pixels, sur la base de la valeur initiale du paramètre interne, de la valeur initiale du paramètre externe, de la valeur initiale du coefficient de distorsion et d'un modèle mathématique de la caméra ;
un module de projection (1030), configuré pour projeter une pluralité de points caractéristiques dans une carte de haute précision d'une première zone sur le système de coordonnées de pixels d'une première image, de la première zone, capturée par la caméra pour obtenir une pluralité de points de projection ; et
un module de calcul (1040), configuré pour obtenir le paramètre interne et le coefficient de distorsion de la caméra par une méthode des moindres carrés, sur la base de coordonnées de la pluralité de points caractéristiques dans le système de coordonnées de pixels, de la relation de conversion et de coordonnées mondiales de la pluralité de points de projection,
dans lequel la caméra est une caméra de type canon, le modèle mathématique de la caméra est un modèle de projection de caméra à sténopé, les paramètres internes fx, fy et f de la caméra répondent à une condition fx=fy=f, et le premier module de détermination (1010) calcule une valeur initiale de f selon la formule suivante :

$$f/(w^2+h^2)^{0,5}=lens/(lenth/sensor\_size\_scale),$$

où *lens* représente une longueur focale de la caméra, *lenth* représente un paramètre de taille de la caméra, *sensor_size_scale* représente un paramètre de taille et d'échelle de la caméra, et w et h représentent respectivement une largeur et une hauteur d'un rapport de résolution d'image de la caméra.

7. Appareil selon la revendication 6, dans lequel le premier module de détermination (1010) détermine la valeur initiale du paramètre interne en fonction de paramètres de configuration de la caméra ;
en option, les paramètres de configuration comprennent une longueur focale et un rapport de résolution d'image de la caméra.

8. Appareil selon la revendication 6 ou 7, dans lequel une valeur initiale de cx parmi les paramètres internes de la caméra est 1/2 fois la largeur du rapport de résolution d'image de la caméra, et une valeur initiale de cy parmi les paramètres internes de la caméra est 1/2 fois la hauteur du rapport de résolution d'image de la caméra.

9. Appareil selon la revendication 8, dans lequel le premier module de détermination (1010) ajuste un angle de la caméra en fonction de positions de la pluralité de points caractéristiques dans la première image et de positions de la pluralité de points de projection dans la première image, de sorte que les positions de la pluralité de points caractéristiques correspondent aux positions de la pluralité de points de projection, et le premier module de détermination (1010) détermine la valeur initiale du paramètre externe de la caméra en fonction de l'angle ajusté et d'un paramètre de position d'installation de la caméra.

10. Dispositif électronique, comprenant :

au moins un processeur ; et
une mémoire connectée de manière communicative audit au moins un processeur ;
dans lequel la mémoire stocke des instructions exécutables par ledit au moins un processeur, et les instructions, lorsqu'elles sont exécutées par ledit au moins un processeur, permettent audit au moins un processeur d'exécuter le procédé selon l'une quelconque des revendications 1 à 5.

11. Support de stockage non transitoire lisible par ordinateur stockant des instructions informatiques, dans lequel les instructions informatiques, lorsqu'elles sont exécutées par un ordinateur, permettent à l'ordinateur d'exécuter le procédé selon l'une quelconque des revendications 1 à 5.

12. Produit programme informatique comprenant un programme informatique, dans lequel le programme informatique, lorsqu'il est exécuté par un processeur, met en œuvre le procédé selon l'une quelconque des revendications 1 à 5.

13. Dispositif de bord de route, comprenant le dispositif électronique selon la revendication 10.

S101

determining an initial value of an internal parameter of a camera, an initial value of an external parameter of the camera, and an initial value of a distortion coefficient of the camera

S102

determining a conversion relationship of a point in an image captured by the camera from a world coordinate system to a pixel coordinate system, based on the initial value of the internal parameter, the initial value of the external parameter, the initial value of the distortion coefficient and a mathematical model of the camera

S103

projecting a plurality of feature points in a high-precision map of a first area onto the pixel coordinate system of a first image, of the first area, captured by the camera to obtain a plurality of projection points

S104

obtaining the internal parameter and the distortion coefficient of the camera through a least square method, based on coordinates of the plurality of feature points in the pixel coordinate system, the conversion relationship and world coordinates of the plurality of projection points

**FIG. 1**

3D coordinate of ground surface mark angular point

2D coordinate of a ground surface mark angular point

pinhole camera model of gun camera

internal parameter of gun type camera

**FIG. 2**

**FIG. 3**

**FIG. 4**

**FIG. 5**

**FIG. 6**

FIG. 7

**FIG. 8**

FIG. 9

―1000

first determination
module 1010

second determination
module 1020

projection module 1030

calculation module 1040

**FIG. 10**

1100

computing unit ― 1101

ROM ― 1102

RAM ―1103

― 1104

― 1105

I/O interface

input unit ― 1106

output unit ― 1107

storage unit ― 1108

communication
unit ―1109

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020226789 A1